# EUROPÄISCHE PATENTSCHRIFT

(11) **EP 3 597 449 B1**
(45) Veröffentlichungstag und Bekanntmachung des Hinweises auf die Patenterteilung: **24.03.2021**
(21) Anmeldenummer: 19179330.6
(22) Anmeldetag: 11.06.2019
(51) Int. Cl.: B60C 11/04, B60C 11/13

(54) **FAHRZEUGLUFTREIFEN**
PNEUMATIC TYRE
PNEUMATIQUES DE VÉHICULE

(30) Priorität: 18.07.2018 DE 102018211946
(43) Veröffentlichungstag der Anmeldung: 22.01.2020
(73) Patentinhaber: Continental Reifen Deutschland GmbH, 30165 Hannover (DE)
(72) Erfinder: Özüduru, Ahmet, 30165 Hannover (DE); Jankowski, Morten, 30165 Hannover (DE)
(74) Vertreter: Continental Corporation

(56) Entgegenhaltungen:
- EP-A1- 2 465 705
- DE-A1- 2 951 444
- TW-A- 201 343 428
- US-A- 4 703 788

## Beschreibung

Die Erfindung betrifft einen Fahrzeugluftreifen mit einem Laufstreifen mit auf Profiltiefe ausgeführten Hauptrillen, insbesondere Umfangsrillen oder Schrägrillen, wobei die Hauptrillen zwei einander gegenüberliegende Rillenwände und an diese anschließend eine Rillengrundrille aufweisen, wobei die beiden Rillenwände ebene, bis zur Laufstreifenperipherie verlaufende Flankenflächen und an diese anschließend in Richtung zur Rillengrundrille abfallende Schrägflächen aufweisen.

Es ist bekannt, dass breit und tief ausgeführte Hauptrillen für das Wasserdrainagevermögen sowie die Schneegriffeigenschaften eines Fahrzeugluftreifens von Vorteil sind. Die Rillengründe breiter Hauptrillen sind jedoch besonders anfällig für durch eindringende Fremdkörper, wie Steine und dergleichen, verursachte Schäden. Als Gegenmaßnahme wurde bisher unter anderem eine Erhöhung der Unterprofilstärke des Laufstreifens in Betracht gezogen, wodurch jedoch der Laufstreifen entsprechend dicker wird, was wiederum zu einem höheren Reifengewicht und daher zu einem höheren Rollwiderstand führt.

Ein Fahrzeugluftreifen der eingangs genannten Art, welcher ein Nutzfahrzeugreifen ist, ist beispielsweise aus der US 4 703 788 A bekannt. Der Laufstreifen dieses Reifens weist in Draufsicht zick-zack-förmig verlaufende Umfangsrillen auf. An den Rillenflanken der Umfangsrillen sind in Draufsicht jeweils über einen "Zacken" verlaufende, daher in Draufsicht flach V-förmige, in Umfangsrichtung langgestreckte Vorsprünge ausgebildet, welche in radialer Richtung eine Höhe von 20% bis 80% der Profiltiefe aufweisen. Die gegenseitigen Abstände der in Umfangsrichtung aufeinanderfolgenden Vorsprünge sind auf die Umfangslänge der Vorsprünge abgestimmt, wobei die Abstände 10% bis 50% der Umfangslänge der Vorsprünge betragen. Die getroffenen Maßnahmen sollen ein Verfangen von Steinen in den Umfangsrillen verhindern, wobei ein guter Nassgriff erhalten bleiben soll.

Die DE 29 51 444 A1 offenbart einen weiteren Fahrzeugluftreifen mit einem Laufstreifen mit in Draufsicht zick-zack-förmig verlaufenden Umfangsrillen. Die schulterseitigen Umfangsrillen weisen zumindest einen einschnittartig schmalen radial inneren Rillenabschnitt auf, welcher sich beim Abrollen des Reifens am Untergrund schließt. Um die Aquaplaningeigenschaften des Laufstreifens zu verbessern, sind an den Außenseiten der Knickstellen im zick-zack-Verlauf der Umfangsrillen die Umfangsrillen lokal verbreiternde, in Draufsicht rechteckige Aussparungen ausgebildet.

Aus der EP 2 465 705 A1 ist ein Fahrzeugluftreifen mit einem Laufstreifen mit Umfangsrillen bekannt, welche an der Laufstreifenperipherie derart mit in Draufsicht dreieckigen Aussparungen versehen sind, dass die Umfangsrillen zick-zack-förmig verlaufende Rillenkanten und jeweils eine gerade verlaufende Rillengrundrille aufweisen. Diese Ausgestaltung soll günstig für die Bremseigenschaften auf nasser Fahrbahn sein.

Die TW 2013 434 28 A offenbart einen Fahrzeugluftreifen mit einem Laufstreifen mit in Draufsicht zick-zack-förmig verlaufenden Umfangsrillen, deren Rillenflanken zur radialen Richtung geneigte Flächen, im Wesentlichen in der Gestalt von rechtwinkeligen Dreiecken, aufweisen.

Aus der EP 2 567 832 A1 ist ein Fahrzeugluftreifen bekannt, dessen Laufstreifen Umfangsrillen mit im Querschnitt rechteckigen Rillengrundrillen aufweist, welche sich aus breiten Umfangsabschnitten und aus schmalen Umfangsabschnitten zusammensetzen, wobei jeweils ein breiter Umfangsabschnitt und ein schmaler Umfangsabschnitt abwechselnd, also alternierend, aufeinanderfolgen. Die Breite eines schmalen Umfangsabschnittes beträgt 25% bis 85% der Breite eines breiten Umfangsabschnittes. Bei einer Ausführungsvariante verläuft die Rillengrundrille über die Erstreckung der Umfangsrille wellenförmig auf und ab, sodass die Rillengrundrille in den schmalen Umfangsabschnitten tiefer ist als in den breiten Umfangsabschnitten. Umfangsrillen mit solchen Rillengrundrillen sollen das Wasserdrainagevermögen des Laufstreifens verbessern, wobei die breiten und schmalen Umfangsabschnitte eine pulsierende Wasserströmung bewirken sollen. Vor allem die breiten Umfangsabschnitte der Rillengrundrillen sind gegenüber einem Eindringen von Steinen ungeschützt, sodass die Gefahr einer Beschädigung des Gummimaterials, beispielsweise die Gefahr des Entstehens von Einrissen gegeben ist. Solche Einrisse können sich sehr schnell fortpflanzen und beeinträchtigen die Haltbarkeit des Laufstreifens. Um dem Entgegenzuwirken ist bei einer Variante vorgesehen, in den breiten Umfangsabschnitten mittig Vorsprünge auszubilden, sogenannte "Steinauswerfer". Diese Vorsprünge behindern jedoch die Wasserdrainage durch die Umfangsrille.

Aus der DE 2007 016 930 A1 ist ein Fahrzeugluftreifen mit einem Laufstreifen mit Umfangsrillen bekannt, in welchen an den Rillenwänden Vorsprünge ausgebildet sind. Die Vorsprünge sind Teile oder Abschnitte spitzer Körper, deren Basisfläche am Rillengrund der Hauptrille liegt und deren Spitze der Laufstreifenperipherie benachbart ist. Der Abstand der Spitzen der Vorsprünge von der Laufstreifenperiphere beträgt bis zu 30% der Profiltiefe. Solche Vorsprünge sollen insbesondere ein verlässliches Abstoßen von Fremdkörpern, insbesondere von kleinen Steinen, bewirken.

Aus der WO 2016 003 433 A1 ist ein Fahrzeugluftreifen mit einem Laufstreifen mit reduzierter Unterprofilstärke bekannt. Der Laufstreifen weist Umfangsrillen auf, welche mittig auf ihrem Rillengrund ausgebildete in Umfangsrichtung umlaufende, als Steinauswerfer wirkende Erhebungen aufweisen.

Der Erfindung liegt gegenüber dem aus der EP 2 567 832 A1 bekannten Fahrzeugluftreifen die Aufgabe zugrunde, das Eindringen von Fremdkörpern, wie Steinen, in die Rillengrundrille zu vermeiden und ein gutes Wasserableitvermögen sicherzustellen bzw. beizubehalten.

Gelöst wird die gestellte Aufgabe erfindungsgemäß dadurch,
dass die Rillengrundrille
- eine konstante Breite von mindestens 3,0 mm und höchstens 40% der Breite der Hauptrille an der Laufstreifenperipherie und
- eine Tiefe von mindestens 0,3 mm und höchstens 90% eines Abstandes, welcher, im Querschnitt betrachtet, zwischen dem Niveau des tiefsten Punktes der Hauptrille und dem Anschluss der Flankenflächen an die Schrägflächen vorliegt und 20% bis 60% der Profiltiefe der Hauptrille beträgt, aufweist,
wobei die ebenen Flankenflächen in radialer Richtung oder unter einem Winkel von bis 10° zur radialen Richtung verlaufen und
wobei die Schrägflächen zur radialen Richtung unter einem Winkel von 30° bis 60° verlaufen.

Die mit konstanter Breite ausgeführte Rillengrundrille unterstützt und ermöglicht gemeinsam mit den Schrägflächen eine verwirbelungsarme Ableitung von Wasser durch die Hauptrillen beim Fahren auf nassem Untergrund, wobei die geneigten Schrägflächen zusätzlich ein Auswerfen von Fremdkörpern begünstigen, sodass diese in die Rillengrundrille nicht eindringen. Dadurch kann radial innerhalb der Rillengrundrille eine geringe Unterprofilstärke vorgesehen werden, wodurch der Rollwiderstand des Fahrzeugluftreifens geringgehalten wird.

Bei einer Mindesttiefe von 0,3 mm verbleibt eine größere Querschnittsfläche in der Hauptrille erhalten, wodurch die Wasserableitung durch die Hauptrille besonders effektiv ist. Die Maximaltiefe von 90% des erwähnten Abstandes sorgt hingegen für einen besonders guten Schutz vor dem Eindringen von Fremdkörpern.

Gemäß einer bevorzugten Variante beträgt die Breite der Rillengrundrille 20% bis 30% der Breite der Hauptrille. Eine Breite von mindestens 20% der Breite der Hauptrille ist im Hinblick auf die Wasserableiteigenschaften der Rillengrundrille von Vorteil, eine Breite von höchstens 30% der Breite der Hauptrille trägt zu einem besonders guten Schutz der Rillengrundrille vor dem Eindringen von Fremdkörpern bei.

Es ist ferner bevorzugt, wenn der Winkel, unter welchem die Schrägflächen zur radialen Richtung verlaufen, 40° bis 50° beträgt. Auf derart geneigten Schrägflächen wird Wasser besonders zügig in die Rillengrundgrille abgeleitet, wobei die Schrägflächen gleichzeitig die Rillenwände gut abstützen.

Vorzugsweise beträgt die Tiefe der Rillengrundrille 30% bis 70%, insbesondere 45% bis 55%, des erwähnten Abstandes.

Ein vorteilhafter Kompromiss zwischen diesen Effekten lässt sich erreichen, wenn der Abstand zwischen dem Niveau des tiefsten Punktes der Hauptrille und dem Anschluss der Flankenflächen an die Schrägflächen bis zu 40% der Profiltiefe der Hauptrille beträgt.

Für die Rissbeständigkeit am Rillengrund der Rillengrundrille ist es vorteilhaft, wenn diese, im Querschnitt betrachtet, U-förmig ist.

Die erwähnte abstützende Wirkung der Schrägflächen ist besonders gut ausgeprägt, wenn die Rillenwände jeweils eine einzige, über die gesamte Erstreckung der Hauptrille verlaufende Schrägfläche aufweisen.

Eine im Hinblick für die Wasserdrainage besonders vorteilhafte Ausführungsvariante ist dadurch gekennzeichnet, dass die Rillengrundrille zumindest abschnittsweise in Draufsicht gerade verläuft.

Gemäß einer weiteren bevorzugten Ausführungsvariante weisen die Rillenwände jeweils eine Vielzahl von Schrägflächen auf, welche in radialer Richtung jeweils einen Vorsprung begrenzen, welcher ansonsten von Rillenflanken der Rillengrundrille begrenzt ist. Die Vorsprünge wirken als Steinauswerfer und verringern die Querschnittsfläche der Hauptrille nur in einem derartigen Ausmaß, dass das Wasserdrainagevermögen der Hauptrillen auf gutem Niveau erhalten bleibt.

Gemäß einer weiteren bevorzugten Ausführungsvariante verläuft die Rillengrundrille in Draufsicht zumindest abschnittsweise wellen- oder zick-zack-förmig. Solche Rillengrundrillen sind besonders gut vor dem Eindringen von Fremdkörpern geschützt.

Die gemäß der Erfindung bzw. gemäß einer der bevorzugten Ausführungsvarianten ausgeführte Rillengrundrille ermöglicht es ferner, geringe Unterprofilstärken vorzusehen, wodurch der Rollwiderstand reduziert wird und die Produktionskosten der Reifen geringer sind, da weniger Kautschukmischung zur Fertigung der Reifen erforderlich ist. In diesem Zusammenhang ist es von Vorteil, wenn der Laufstreifen zwischen dem tiefsten Punkt der Hauptrille und dem Gürtelverband in radialer Richtung eine Unterprofilstärke von 1,0 mm bis 5,0 mm aufweist.

Weitere Merkmale, Vorteile und Einzelheiten der Erfindung werden nun anhand der Zeichnung, die schematisch ein Ausführungsbeispiel der Erfindung zeigt, näher beschrieben. Dabei zeigen
Fig. 1 einen Querschnitt durch einen Nutzfahrzeugreifen im Bereich des Laufstreifens und Gürtelverbandes mit einer ersten Ausführungsvariante der Erfindung,
Fig. 1a einen vergrößerten Querschnitt durch eine Umfangsrille des Laufstreifens des Nutzfahrzeugreifens aus Fig. 1,
Fig. 1b eine schematische Draufsicht auf einen Abschnitt einer Umfangsrille des Laustreifens aus Fig. 1,
Fig. 2 eine schematische Draufsicht auf einen Abschnitt einer Umfangsrille mit einer zweiten Ausführungsvariante der Erfindung,
Fig. 3 eine schematische Draufsicht auf einen Abschnitt einer Umfangsrille mit einer dritten Ausführungsvariante der Erfindung und
Fig. 3a einen vergrößerten Schnitt entlang der Linie IIIa-IIIa der Fig. 3.

Erfindungsgemäß ausgeführte Fahrzeugluftreifen sind insbesondere Nutzfahrzeugreifen in Radialbauart, vorzugsweise für Transporter oder Lastkraftwagen.

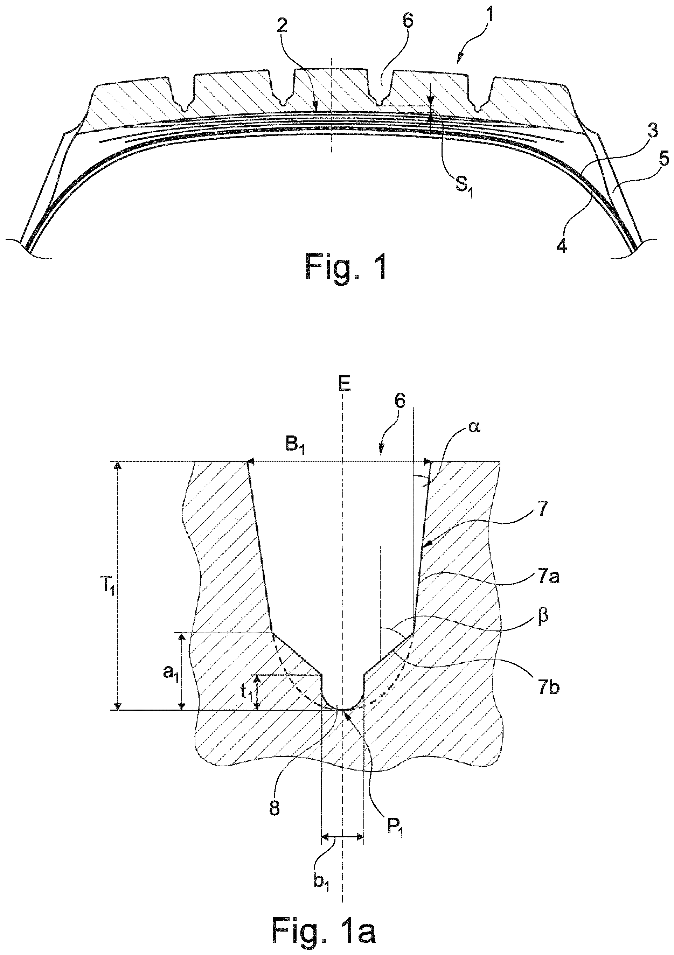

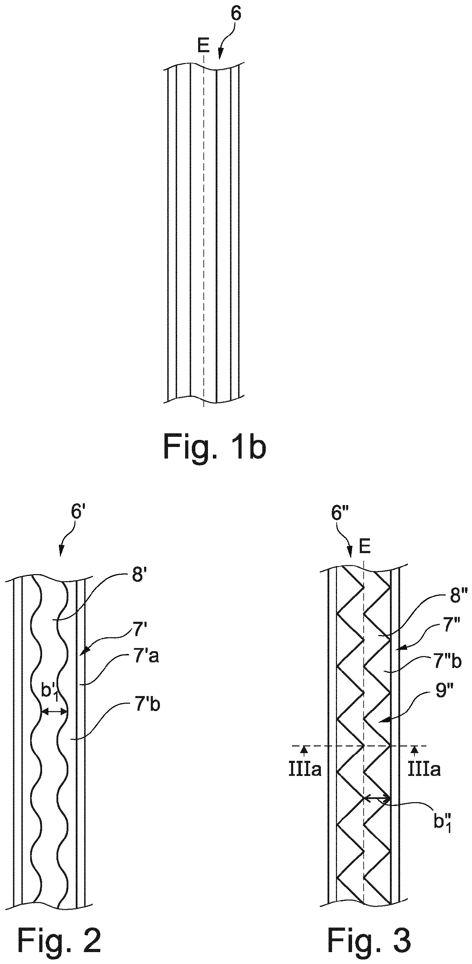

In Fig. 1 sind von den üblichen Bauteilen eines Nutzfahrzeugreifens ein Laufstreifen 1, ein radial innerhalb des Laufstreifens 1 befindlicher, mehrlagiger, beim gezeigten Ausführungsbeispiel vierlagiger, Gürtelverband 2, Abschnitte einer Karkasseinlage 3 und einer luftdichten Innenschicht 4 sowie die axial äußeren Endabschnitte von Seitenwänden 5 gezeigt. Die Wulstbereiche mit Wulstkernen, Kernprofilen und weiteren, gegebenenfalls in den Wulstbereichen vorgesehenen Verstärkungslagen sind nicht gezeigt und können in bekannter Weise ausgeführt sein.

Der Laufstreifen 1 ist beim gezeigten Ausführungsbeispiel mit vier in Draufsicht gerade verlaufenden Umfangsrillen 6 versehen (Fig. 1b). Die Umfangsrillen 6 können jedoch auch zick-zack- oder wellenförmig verlaufen bzw. zick-zack- oder wellenförmig verlaufende Abschnitte aufweisen.

Wie Fig. 1a zeigt, weist jede Umfangsrille 6 an der Laufstreifenperipherie in axialer Richtung eine Breite Bi auf und ist in radialer Richtung auf die vorgesehene Profiltiefe T₁ ausgeführt. Für Nutzfahrzeugreifen beträgt die Breite B₁ der Umfangsrille 6 insbesondere 6,0 mm bis 25,0 mm und die Profiltiefe T₁ üblicherweise 9,0 mm bis 26,0 mm. Wie Fig. la in Verbindung mit Fig. 1b zeigt, ist die Umfangsrille 6 bezüglich einer Mittelebene E, welche von der radialen Richtung und der Umfangsrichtung aufgespannt ist, symmetrisch ausgeführt. Gemäß Fig. 1a weist die Umfangsrille 6 zwei einander gegenüberliegend verlaufende Rillenwände 7 und eine zwischen den Rillenwänden 7 und gleichzeitig durch den tiefsten Punkt P₁ der Umfangsrille 6 verlaufende Rillengrundrille 8 auf.

Die Rillenwände 7 setzen sich, im Querschnitt betrachtet, jeweils aus einer zur Laufstreifenperiphere verlaufenden, ebenen radial äußeren Flankenfläche 7a und einer zur Rillengrundrille 8 verlaufenden und zu dieser abfallenden radial inneren Schrägfläche 7b zusammen. Jede radial äußere Flankenfläche 7a verläuft, im Querschnitt betrachtet, zur radialen Richtung unter einem Winkel α von 0° bis zu 10°, kann daher auch in radialer Richtung verlaufen. Die Schrägflächen 7b schließen in einem gegenüber dem Niveau des tiefsten Punktes P₁ in radialer Richtung ermittelten Abstand a₁ von bis zu bis 60%, insbesondere von 20% bis 40%, der Tiefe T₁ der Umfangsrille 6 an die radial inneren Enden der Flankenflächen 7a an. Ferner verlaufen die Schrägflächen 7b, im Querschnitt betrachtet, zur radialen Richtung unter einem Winkel β von 30° bis kleiner 90°, insbesondere von bis zu 60°, und bevorzugter Weise von 40° bis 50°.

Die Rillengrundrille 8 ist, im Querschnitt betrachtet, U-förmig, weist zwischen ihren radial äußeren Enden in axialer Richtung eine Breite b₁ von mindestens 3,0 mm und höchstens 40% der Breite B₁ der Umfangsrille 6 auf, wobei die Breite b₁ vorzugsweise 20% bis 30% der Breite B₁ der Umfangsrille 6 beträgt. Ferner weist die Rillengrundrille 8 in radialer Richtung eine Tiefe t₁ von mindestens 0,3 mm und höchstens 90% des erwähnten Abstandes a₁ auf, wobei die Tiefe t₁ insbesondere 30% bis 70%, vorzugsweise 45% bis 55%, des Abstandes a₁ beträgt. Die Breite b₁ der Rillengrundrille 8 ist über die Erstreckung der Rillengrundrille 8 konstant, wobei unter einer konstanten Breite eine solche zu verstehen ist, welche fertigungsbedingt derart variieren kann, dass sie an der tatsächlich breitesten Stelle der Rillengrundrille 8 um bis zu 3% größer ist als die tatsächliche Breite an der schmalsten Stelle der Rillengrundrille 8.

Bevorzugter Weise ist die Umfangsrille 6 derart ausgeführt, dass der Laufstreifen 1 zwischen dem tiefsten Punkt P₁ der Umfangsrille 6 und dem Gürtelverband 2 in radialer Richtung eine Unterprofilstärke S₁ (Fig. 1) von 1,0 mm bis 5,0 mm aufweist.

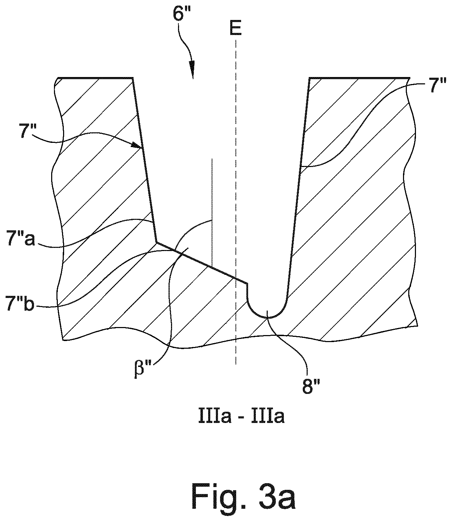

Fig. 2 und Fig. 3 zeigen jeweils eine schematische Draufsicht auf einen Abschnitt einer Umfangsrille 6' bzw. 6", welche Varianten der Umfangsrille 6 sind.

Die in Fig. 2 gezeigte Umfangsrille 6' unterscheidet sich von der in Fig. 1 gezeigten Umfangsrille 6 dadurch, dass sie eine in Draufsicht wellenförmig verlaufende Rillengrundrille 8' aufweist, sodass Rillenwände 7' mit ebenen radial äußeren Flankenflächen 7'a und einer radial inneren Schrägfläche 7'b vorgesehen sind. Entsprechend dem wellenförmigen Verlauf der Rillengrundrille 8' weisen die beiden radial inneren Schrägflächen 7'b über ihre Erstreckung eine sich kontinuierlich wiederholende Zu- und Abnahme ihrer im Querschnitt ermittelten Breite auf. Die Rillengrundrille 8' weist dabei an ihrem radial äußeren Ende ein konstante Breite b₁' auf, welche mindestens 3,0 mm und höchstens 40% der Breite der Umfangsrille 6' an der Laufstreifenperipherie beträgt. Insbesondere beträgt die Breite b₁ der Rillengrundrille 8' 20% bis 30% der Breite der Umfangsrille 6' an der Laufstreifenperipherie.

Die in Fig. 3 gezeigte Umfangsrille 6" weist eine in Draufsicht zick-zack-förmig verlaufende Rillengrundrille 8" auf, welche sich zwischen einer Vielzahl in Draufsicht dreieckiger Vorsprünge 9" erstreckt. Die Vorsprünge 9" reichen beim gezeigten Ausführungsbeispiel bis zur Mittelebene E der Umfangsrille 6" und sind in radialer Richtung von Schrägflächen 7"b der Rillenwände 7" begrenzt, wobei die Schrägflächen 7"b, im Querschnitt betrachtet, zur radialen Richtung unter einem Winkel β" (Fig. 3a) von 30° bis kleiner 90°, insbesondere von bis zu 60°, und bevorzugter Weise von 40° bis 50°, verlaufen. Entsprechend der Zick-Zack-Form der Rillengrundrille 8" sind die Vorsprünge 9" innerhalb der Umfangsrille 6" alternierend an den Rillenwänden 7" ausgebildet, wobei die Vorsprünge 9" an der einen Rillenwand 7" zu den Vorsprüngen 9" an der anderen Rillenwand 7" in Umfangsrichtung versetzt sind. Im Bereich der Schrägflächen 7"b weisen die Rillenwände 7" zur Laufstreifenperiphere verlaufende Flankenflächen 7"a auf (Fig. 3a). Zwischen den in Umfangsrichtung jeweils unmittelbar aufeinanderfolgenden Vorsprüngen 9" reicht die Rillengrundrille 8" mit den "außenseitigen Spitzen" ihrer Zick-Zack-Form bis den Rillenwänden 7" (Fig. 3a). Die Rillengrundrille 8" weist über ihre gesamte Erstreckung eine konstante Breite b₁" auf, welche mindestens 3,0 mm und höchstens 40% der Breite der Umfangsrille 6" an der Laufstreifenperipherie beträgt.

Die Erfindung ist auf die beschriebenen und dargestellten Ausführungsbeispiele nicht eingeschränkt sondern nur durch die angefügten Ansprüche. Gemäß der Erfindung gestaltete Rillen sind Hauptrillen eines Laufstreifens, zu welchen beispielsweise Umfangsrillen sowie insbesondere V-förmig über die Laufstreifenbreite verlaufende Schrägrillen gehören. Unter einer Schrägrille wird dabei eine Rille verstanden, welche zumindest über den Großteil ihrer Erstreckung unter einem von der axialen Richtung um größer 45° abweichenden Winkel verläuft und - im Gegensatz zur Umfangsrille - nicht in Umfangsrichtung verläuft oder höchstens einen - im Vergleich zur gesamten Erstreckungslänge - kurzen in Umfangsrichtung verlaufenden Abschnitt aufweist. Insbesondere erstrecken sich Schrägrillen zur axialen Richtung unter einem Winkel von bis zu 75°.

### Bezugszeichenliste

- 1: Laufstreifen
- 2: Gürtelverband
- 3: Karkasseinlage
- 4: Innenschicht
- 5: Seitenwand
- 6, 6', 6": Umfangsrille
- 7, 7', 7": Rillenwand
- 7a, 7'a, 7"a: Flankenfläche
- 7b, 7'b, 7"b: Schrägfläche
- 8, 8', 8: Rillengrundrille
- 9": Vorsprung
- a₁: Abstand
- B₁, b₁, b₁', b₁": Breite
- E: Mittelebene
- P₁: tiefster Punkt
- S₁: Unterprofilstärke
- T₁, t₁: Tiefe
- α, β, β": Winkel

## Patentansprüche

1. Fahrzeugluftreifen mit einem Laufstreifen (1) mit auf Profiltiefe (T₁) ausgeführten Hauptrillen (6, 6', 6"), insbesondere Umfangsrillen (6, 6', 6") oder Schrägrillen, wobei die Hauptrillen (6, 6', 6") zwei einander gegenüberliegende Rillenwände (7, 7', 7") und an diese anschließend eine Rillengrundrille (8, 8', 8") aufweisen,
wobei die beiden Rillenwände (7, 7', 7") ebene, bis zur Laufstreifenperipherie verlaufende Flankenflächen (7a, 7'a, 7"a) und an diese anschließend in Richtung zur Rillengrundrille (8, 8', 8") abfallende Schrägflächen (7b, 7'b, 7"b) aufweisen,
**dadurch gekennzeichnet,**
**dass** die Rillengrundrille (8, 8', 8")
- eine konstante Breite (b₁, b₁', b₁") von mindestens 3,0 mm und höchstens 40% der Breite (B₁) der Hauptrille (6, 6', 6") an der Laufstreifenperipherie und
- eine Tiefe (t₁) von mindestens 0,3 mm und höchstens 90% eines Abstandes (ai), welcher, im Querschnitt betrachtet, zwischen dem Niveau des tiefsten Punktes (P₁) der Hauptrille (6, 6', 6") und dem Anschluss der Flankenflächen (7a, 7'a, 7"a) an die Schrägflächen (7b, 7'b, 7"b) vorliegt und 20% bis 60% der Profiltiefe (T₁) der Hauptrille (6, 6', 6") beträgt, aufweist,
wobei die ebenen Flankenflächen (7a, 7'a, 7"a) in radialer Richtung oder unter einem Winkel (α) von bis 10° zur radialen Richtung verlaufen und
wobei die Schrägflächen (7b, 7'b, 7"b) zur radialen Richtung unter einem Winkel (ß) von 30° bis 60° verlaufen.

2. Fahrzeugluftreifen nach Anspruch 1, **dadurch gekennzeichnet, dass** die Breite (b₁, b₁', b₁") der Rillengrundrille (8, 8', 8") 20% bis 30% der Breite (B₁) der Hauptrille (6, 6', 6") beträgt.

3. Fahrzeugluftreifen nach Anspruch 1 oder 2, **dadurch gekennzeichnet, dass** der Winkel (ß), unter welchem die Schrägflächen (7b, 7'b, 7"b) zur radialen Richtung verlaufen, 40° bis 50° beträgt.

4. Fahrzeugluftreifen nach einem der Ansprüche 1 bis 3, **dadurch gekennzeichnet, dass** die Tiefe (t₁) der Rillengrundrille (8, 8', 8") 30% bis 70%, insbesondere 45% bis 55%, des Abstandes (a₁) beträgt, welcher zwischen dem Niveau der tiefsten Punktes (P₁) der Hauptrille (6, 6', 6") und dem Anschluss der Flankenflächen (7a, 7'a, 7"a) an die Schrägflächen (7b, 7'b, 7"b) vorliegt.

5. Fahrzeugluftreifen nach einem der Ansprüche 1 bis 4, **dadurch gekennzeichnet, dass** der Abstand (a₁) zwischen dem Niveau des tiefsten Punktes (P₁) der Hauptrille (6, 6', 6") und dem Anschluss der Flankenflächen (7a, 7'a, 7"a) an die Schrägflächen (7b, 7'b, 7"b) bis zu 40%, der Profiltiefe (T₁) der Hauptrille (6, 6', 6") beträgt.

6. Fahrzeugluftreifen nach einem der Ansprüche 1 bis 5, **dadurch gekennzeichnet, dass** die Rillengrundrille (8, 8', 8"), im Querschnitt betrachtet, U-förmig ist.

7. Fahrzeugluftreifen nach einem der Ansprüche 1 bis 6, **dadurch gekennzeichnet, dass** die Rillenwände (7, 7') jeweils eine einzige, über die gesamte Erstreckung der Hauptrille (6, 6') verlaufende Schrägfläche (7b, 7'b) aufweisen.

8. Fahrzeugluftreifen nach einem der Ansprüche 1 bis 7, **dadurch gekennzeichnet, dass** die Rillengrundrille (8) zumindest abschnittsweise in Draufsicht gerade verläuft.

9. Fahrzeugluftreifen nach einem der Ansprüche 1 bis 8, **dadurch gekennzeichnet, dass** die Rillenwände (7") jeweils eine Vielzahl von Schrägflächen (7"b) aufweisen, welche in radialer Richtung jeweils einen Vorsprung (9") begrenzen, welcher ansonsten von Rillenflanken der Rillengrundrille (8', 8") begrenzt ist.

10. Fahrzeugluftreifen nach einem der Ansprüche 1 bis 9, **dadurch gekennzeichnet, dass** die Rillengrundrille (8) in Draufsicht zumindest abschnittsweise wellenförmig verläuft.

11. Fahrzeugluftreifen nach einem der Ansprüche 1 bis 10, **dadurch gekennzeichnet, dass** die Rillengrundrille (8) in Draufsicht zumindest abschnittsweise zick-zack-förmig verläuft.

12. Fahrzeugluftreifen mit einem Gürtelverband (2) nach einem der Ansprüche 1 bis 11, **dadurch gekennzeichnet, dass** der Laufstreifen (1) zwischen dem tiefsten Punkt (P₁) der Hauptrille (6, 6', 6") und dem Gürtelverband (2) in radialer Richtung eine Unterprofilstärke (S₁) von 1,0 mm bis 5,0 mm aufweist.

## Claims

1. Pneumatic vehicle tyre comprising a tread (1) with main grooves (6, 6', 6'') made to the depth of the tread pattern (T₁), in particular circumferential grooves (6, 6', 6" ) or diagonal grooves, the main grooves (6, 6', 6") having two groove walls (7, 7', 7") facing one another and a groove base groove (8, 8', 8") adjoining these walls,
the two groove walls (7, 7', 7") having planar flank surfaces (7a, 7'a, 7"a), extending up to the periphery of the tread, and sloping surfaces (7b, 7'b, 7"b), sloping down in an adjoining manner in the direction of the groove base groove (8, 8', 8"),
**characterized**
**in that** the groove base groove (8, 8', 8")
- has a constant width (b₁, b₁', b₁" of at least 3.0 mm and at most 40% of the width (B₁) of the main groove (6, 6', 6") at the periphery of the tread and
- has a depth (t₁) of at least 0.3 mm and at most 90% of a distance (a₁) that there is, seen in cross section, between the level of the deepest point (P₁) of the main groove (6, 6', 6") and the connection of the flank surfaces (7a, 7'a, 7"a) to the sloping surfaces (7b, 7'b, 7"b) and is 20% to 60% of the depth of the tread pattern (T₁) of the main groove (6, 6', 6"),
the planar flank surfaces (7a, 7'a, 7"a) extending in the radial direction or at an angle (a) of up to 10° to the radial direction and
the sloping surfaces (7b, 7'b, 7"b) extending at an angle (β) of 30° to 60° to the radial direction.

2. Pneumatic vehicle tyre according to Claim 1, **characterized in that** the width (b₁, b₁', b₁" of the groove base groove (8, 8', 8") is 20% to 30% of the width (B₁) of the main groove (6, 6, 6").

3. Pneumatic vehicle tyre according to Claim 1 or 2, **characterized in that** the angle (β) at which the sloping surfaces (7b, 7'b, 7"b) extend in relation to the radial direction is 40° to 50°.

4. Pneumatic vehicle tyre according to one of Claims 1 to 3, **characterized in that** the depth (t₁) of the groove base groove (8, 8', 8") is 30% to 70%, in particular 45% to 55%, of the distance (a₁) that there is between the level of the deepest point (P₁) of the main groove (6, 6', 6") and the connection of the flank surfaces (7a, 7'a, 7"a) to the sloping surfaces (7b, 7'b, 7"b).

5. Pneumatic vehicle tyre according to one of Claims 1 4, **characterized in that** the distance (a₁) between the level of the deepest point (P₁) of the main groove (6, 6', 6") and the connection of the flank surfaces (7a, 7'a, 7"a) to the sloping surfaces (7b, 7'b, 7"b) is up to 40% of the depth of the tread pattern (T₁) of the main groove (6, 6', 6").

6. Pneumatic vehicle tyre according to one of Claims 1 to 5, **characterized in that** the groove base groove (8, 8', 8") is U-shaped when seen in cross section.

7. Pneumatic vehicle tyre according to one of Claims 1 to 6, **characterized in that** the groove walls (7, 7') have in each case a single sloping surface (7b, 7'b) extending over the entire extent of the main groove (6, 6').

8. Pneumatic vehicle tyre according to one of Claims 1 to 7, **characterized in that** the groove base groove (8) extends at least partly in a straight line in plan view.

9. Pneumatic vehicle tyre according to one of Claims and 8, **characterized in that** the groove walls (7") have in each case a multiplicity of sloping surfaces (7"b), which in the radial direction respectively delimit a projection (9"), which is otherwise delimited by groove flanks of the groove base groove (8', 8").

10. Pneumatic vehicle tyre according to one of Claims 1 to 9, **characterized in that** the groove base groove (8) extends at least partly in a wave-shaped form in plan view.

11. Pneumatic vehicle tyre according to one of Claims 1 to 10, **characterized in that** the groove base groove (8) extends at least partly in a zigzag-shaped form in plan view.

12. Pneumatic vehicle tyre comprising a breaker belt assembly (2) according to one of Claims 1 to 11, **characterized in that** the tread (1) has between the deepest point (P₁) of the main groove (6, 6', 6") and the breaker belt assembly (2) in the radial direction a lower thickness of the tread pattern (S₁) of 1.0 mm to 5.0 mm.

## Revendications

1. Pneumatique de véhicule, comprenant une bande de roulement (1) dotée de rainures principales (6, 6', 6") réalisées à la profondeur de sculpture (T₁) en particulier des rainures circonférentielles (6, 6', 6") ou des rainures obliques, les rainures principales (6, 6', 6") présentant deux parois de rainure (7, 7', 7") opposées l'une à l'autre et une gorge de fond de rainure (8, 8', 8"),
les deux parois de rainure (7, 7', 7") présentant des surfaces de flanc planes (7a, 7'a, 7"a), s'étendant jusqu'à la périphérie de bande de roulement, et adjacentes à celles-ci, des surfaces obliques (7b, 7'b, 7"b) descendant en direction de la gorge de fond de rainure (8, 8', 8"),
**caractérisé en ce que** la gorge de fond de rainure (8, 8', 8") présente
- une largeur constante (b₁, b₁', b₁") au moins de 3,0 mm et au plus de 40 % de la largeur (B₁) de la rainure principale (6, 6', 6") sur la périphérie de bande de roulement, et
- une profondeur (t₁) au moins de 0,3 mm et au plus de 90 % d'une distance (a₁) qui, vue en section transversale, existe entre le niveau du point le plus bas (P₁) de la rainure principale (6, 6', 6") et la jonction des surfaces de flanc (7a, 7'a, 7"a) avec les surfaces obliques (7b, 7'b, 7"b) et représente 20 % à 60 % de la profondeur de sculpture (T₁) de la rainure principale (6, 6', 6"),
les surfaces de flanc planes (7a, 7'a, 7"a) s'étendant dans la direction radiale ou selon un angle (a) jusqu'à 10° par rapport à la direction radiale, et
les surfaces obliques (7b, 7'b, 7"b) s'étendant selon un angle (β) de 30° à 60° par rapport à la direction radiale.

2. Pneumatique de véhicule selon la revendication 1, **caractérisé en ce que** la largeur (b₁, b₁', b₁") de la gorge de fond de rainure (8, 8', 8") mesure de 20 % à 30 % de la largeur (B₁) de la rainure principale (6, 6', 6") .

3. Pneumatique de véhicule selon la revendication 1 ou 2, **caractérisé en ce que** l'angle (β) selon lequel s'étendent les surfaces obliques (7b, 7'b, 7"b) par rapport à la direction radiale mesure de 40° à 50°.

4. Pneumatique de véhicule selon l'une quelconque des revendications 1 à 3, **caractérisé en ce que** la profondeur (t₁) de la gorge de fond de rainure (8, 8', 8") mesure de 30 % à 70 %, en particulier de 45 % à 55 %, de la distance (a₁) qui existe entre le niveau du point le plus bas (P₁) de la rainure principale (6, 6', 6") et la jonction des surfaces de flanc (7a, 7'a, 7"a) avec les surfaces obliques (7b, 7'b, 7"b).

5. Pneumatique de véhicule selon l'une quelconque des revendications 1 à 4, **caractérisé en ce que** la distance (a₁) entre le niveau du point le plus bas (P₁) de la rainure principale (6, 6', 6") et la jonction des surfaces de flanc (7a, 7'a, 7"a) avec les surfaces obliques (7b, 7'b, 7"b) mesure jusqu'à 40 % de la profondeur de sculpture (T₁) de la rainure principale (6, 6', 6").

6. Pneumatique de véhicule selon l'une quelconque des revendications 1 à 5, **caractérisé en ce que** la gorge de fond de rainure (8, 8', 8") est en forme de U, vue en section transversale.

7. Pneumatique de véhicule selon l'une quelconque des revendications 1 à 6, **caractérisé en ce que** les parois de rainure (7, 7') présentent respectivement une seule surface oblique (7b, 7'b) s'étendant sur toute l'étendue de la rainure principale (6, 6').

8. Pneumatique de véhicule selon l'une quelconque des revendications 1 à 7, **caractérisé en ce que** la gorge de fond de rainure (8) s'étend au moins par endroits en ligne droite, en vue de dessus.

9. Pneumatique de véhicule selon l'une quelconque des revendications 1 à 8, **caractérisé en ce que** les parois de rainure (7") présentent respectivement une pluralité de surfaces obliques (7"b) qui délimitent respectivement une saillie (9") dans la direction radiale qui est délimitée par ailleurs par des flancs de gorge de la gorge de fond de rainure (8', 8").

10. Pneumatique de véhicule selon l'une quelconque des revendications 1 à 9, **caractérisé en ce que** la gorge de fond de rainure (8) s'étend au moins par endroits de manière ondulée, en vue de dessus.

11. Pneumatique de véhicule selon l'une quelconque des revendications 1 à 10, **caractérisé en ce que** la gorge de fond de rainure (8) s'étend au moins par endroits en zigzag, en vue de dessus.

12. Pneumatique de véhicule, comprenant un assemblage de ceinture (2) selon l'une quelconque des revendications 1 à 11, **caractérisé en ce que** la bande de roulement (1) présente entre le point le plus bas (P₁) de la rainure principale (6, 6', 6") et l'assemblage de ceinture (2), dans la direction radiale, une épaisseur de sous-sculpture (S₁) de 1,0 mm à 5,0 mm.
